# EUROPÄISCHE PATENTSCHRIFT

(11) **EP 0 816 052 B1**
(45) Veröffentlichungstag und Bekanntmachung des Hinweises auf die Patenterteilung: **25.07.2001**
(21) Anmeldenummer: 97810387.7
(22) Anmeldetag: 18.06.1997
(51) Int. Cl.: B29C 65/02, B29C 65/14, B29C 65/10

(54) **Verschweissvorrichtung mit einer Heizvorrichtung zur Erwärmung von thermoplastischen Faserverbundwerkstoffbändern**
Welding apparatus with heating element for heating bands of fibrous composite thermoplastic material
Appareil de soudage comportant un dispositif de chauffage pour le chauffage de bandes en matière composite thermoplastique renforcée de fibres

(30) Priorität: 03.07.1996 DE 19626662
(43) Veröffentlichungstag der Anmeldung: 07.01.1998
(73) Patentinhaber: ABB RESEARCH LTD., 8050 Zürich (CH)
(72) Erfinder: Johnson, Bruce, Dr., 5417 Untersiggenthal (CH); Mallick, Vishal, Dr., 5413 Birmenstorf (CH); Meynard, François, Dr., 1256 Toinex (CH)
(74) Vertreter: ABB Patent Attorneys

(56) Entgegenhaltungen:
- EP-A- 0 157 403
- EP-A- 0 167 377
- EP-A- 0 325 780
- DE-A- 1 504 987
- DE-A- 2 629 732
- DE-A- 4 208 812
- DE-B- 1 192 813
- FR-A- 1 154 265
- GB-A- 1 309 941
- GB-A- 1 429 329
- US-A- 2 953 976
- US-A- 3 300 350
- US-A- 3 402 089
- US-A- 4 909 870
- US-A- 4 913 772
- DATABASE WPI Section Ch, Week 8641 Derwent Publications Ltd., London, GB; Class A35, AN 86-270625 XP002048947 & SU 1 212 836 A (PATON ELECTROWELD IND) , 23.Februar 1986

## Beschreibung

### Technisches Gebiet

Die Erfindung betrifft eine Verschweissvorrichtung mit einer Heizvorrichtung zur Erwärmung von thermoplastischen Faserverbundwerkstoffbändern nach dem Oberbegriff des ersten Anspruches.

### Stand der Technik

Um thermoplastische Faserverbundwerkstoffbänder mit einer thermoplastischen Matrix und darin eingebetteten Faserwerkstoffen wie Kohle- oder Glasfasern miteinander zu verbinden, werden in einem kontinuierlichen Prozess die einander zugewandten Oberflächen der Bänder an ihrem Zusammenführungspunkt lokal angeschmolzen und die Bänder miteinander verschweisst. Die Wärmeenergie wird dabei auf den Zusammenführungspunkt der Bänder konzentriert. Die Vorschubgeschwindigkeit und damit die Verschweissgeschwindigkeit ist dabei jedoch relativ gering und kann bis zu 20 mm/s betragen. Die benötigte Zeit um ein thermoplastisches Faserband zu erwärmen ist proportional zum Quadrat der Dicke des thermoplastischen Faserbandes, umgekehrt proportional zur thermischen Leitfähigkeit der thermoplastischen Matrix und eine Funktion der Wärmeübertragung an der Oberfläche.

EP-A-0'325'780 offenbart eine Vorrichtung mit den Merkmalen des Oberbegriffs des Patentanspruches 1. Diese Vorrichtung dient der Herstellung eines gewellten Warenbandes, wobei einzelne thermoplastische Bänder mittels ausgedehnter Heizelemente erwärmt und anschliessend mittels einer Walze zusammengepresst werden.

Ebenfalls eine Vorrichtung zur thermoplastischen Verbindung von Warenbahnen mittels eines flächigen Heizelementes offenbart DE-A-42'08'812.

FR-A-1'154'265 zeigt eine Vorrichtung zur Verbindung von thermoplastischen Warenbahnen, wobei die Verbindung lediglich an den Kanten erfolgt. Hierfür werden die Warenbahnen über einen Keil geleitet, wobei der Keil an zwei gegenüberliegenden Seiten eine vertiefte Stufe aufweist, welche elektrisch heizbar ist.

DE-A-1'504'987 und US-A-4'913'772 beschreiben Verschweissvorrichtungen für thermoplastische Warenbahnen, welche einen Heissgasstrahler in Form eines Keils aufweisen. Der Keil ist durch eine perforierte Lochplatte gebildet, durch welche ein heisses Gas strömt.

US-A-2'953'976 offenbart eine Verschweissvorrichtung, welche eine Heizdüse aufweist. Diese Heizdüse ist in Bahnrichtung nach einer Zusammenführrolle, aber in der Nähe einer Anpressrolle angeordnet.

GB-A-1'309'941 beschreibt die Verwendung eines keilförmigen Heizgasstrahlers, um Wände einer Kartonschachteln zusammenzuschweissen.

### Darstellung der Erfindung

Der Erfindung liegt die Aufgabe zugrunde, bei einer Verschweissvorrichtung mit einer Heizvorrichtung zur Erwärmung von thermoplastischen Faserverbundwerkstoffbändern der eingangs genannten Art die Vorschubgeschwindigkeit und damit die Verschweissgeschwindigkeit zu erhöhen.

Erfindungsgemäss wird dies durch eine Verschweissvorrichtung mit den Merkmalen des ersten Anspruches erreicht.

Die Vorteile der Erfindung sind unter anderem darin zu sehen, dass durch diese Heizvorrichtung die thermoplastischen Faserbänder gezielt, grossflächig und damit schnell erwärmt werden, wodurch hohe Verschweissgeschwindigkeiten erreicht werden können. Dadurch kann eine hohe Produktivität erreicht werden.

Es ist vorteilhaft, dass die Heizvorrichtung aus mindestens zwei getrennt regelbaren Teilheizvorrichtungen besteht, an denen jeweils mindestens ein Heizelemente angeordnet ist. Durch die Aufteilung der Heizvorrichtung in Teilheizvorrichtungen kann die Erwärmung der zu verbindenden Bänder unabhängig voneinander kontrolliert werden, wodurch eine weiter erhöhte Qualität des Laminates sowie der Verbindung erzielt wird. Weiter wird durch die erfindungsgemässe Heizvorrichtung der Wärmeverbrauch gesenkt, was die Kosten der produzierten Bänder senkt.

Weitere vorteilhafte Ausgestaltungen der Heizvorrichtung ergeben sich aus den Unteransprüchen. So wird durch die gezielte Verwendung des Heissgases die Menge des benötigten Gases reduziert.

### Kurze Beschreibung der Zeichnung

In der Zeichnung ist ein Ausführungsbeispiel der Erfindung dargestellt.
Es zeigen:
- Fig. 1: eine Seitenansicht einer Vorrichtung zur Verbindung von thermoplastischen Faserbändern;
- Fig. 2: eine Seitenansicht einer Vorrichtung zur Aufbringung von thermoplastischen Faserbändern auf einen drehsymmetrischen Körper;
- Fig. 3: einen Teillängsschnitt einer Heizvorrichtung;
- Fig. 4: einen Teillängsschnitt einer weiteren Heizvorrichtung;
- Fig. 5: eine Draufsicht auf eine Lochplatte;
- Fig. 6: das Detail Vl aus Fig.5.

Es sind nur die für das Verständnis der Erfindung wesentlichen Elemente gezeigt. Nicht dargestellt sind beispielsweise die Kontrolleinrichtungen sowie die Elektrizitäts- und Heissgasversorgung der Vorrichtung.

### Weg zur Ausführung der Erfindung

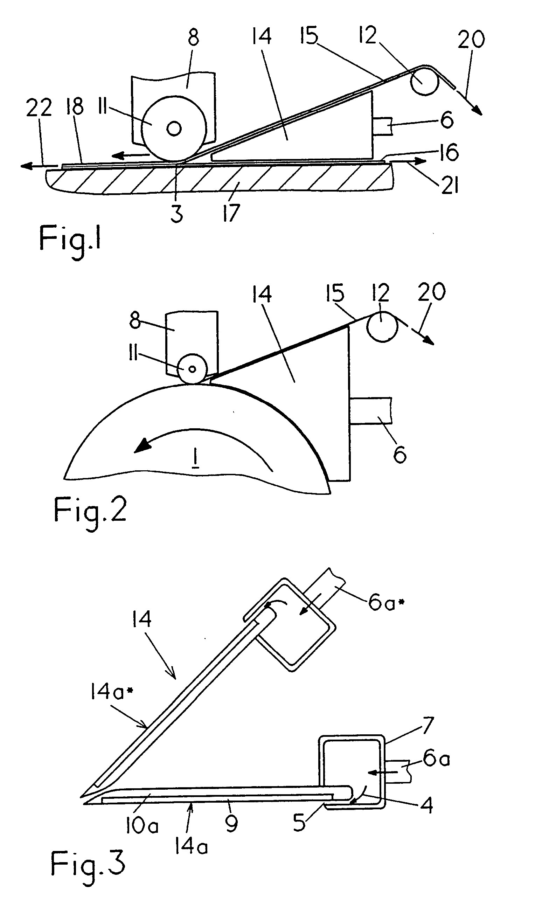

In Fig. 1 wird ein thermoplastisches Faserband 15 und ein thermoplastisches Faserband 16 von nicht dargestellten Bandagenmaterialrollen abgespult. Das thermoplastische Faserband 15 wird über eine Führungsrolle 12 zu einer Heizvorrichtung 14 gefördert. Das thermoplastische Faserband 16 wird über eine Bodenplatte 17 zu der Heizvorrichtung 14 gefördert. Die Heizvorrichtung 14 weist ein Zuführungsleitung 6 zur Zuführung von heissen Gasen auf. Mittels der Heizvorrichtung 14 wird das thermoplastische Faserband 15 und 16 auf den der Heizvorrichtung zugewandten Oberflächen auf mindestens den Schmelzpunkt der thermoplastischen Matrix der thermoplastischen Faserbänder erhitzt. Somit wird das Faserbandes nur über einen Bruchteil seiner Dicke über den Schmelzpunkt der thermoplastischen Matrix erhitzt. Durch eine Pressrolle 11 und über einen Druckzylinder 8 werden die Faserbänder 15, 16 gegeneinandergepresst und somit wird die angeschmolzene Oberfläche des thermoplastischen Faserbandes 15 auf die angeschmolzene Oberfläche des thermoplastischen Faserbandes 16 gedrückt. Die thermoplastischen Faserbänder 15 und 16 werden dadurch kontinuierlich an einem durch die Pressrolle definiertem Verschweissungsbereich 3 miteinander verschweisst, wodurch ein mehrlagiges Faserband 18 resultiert. Auf die thermoplastischen Faserbänder 15, 16 kann dabei eine Zugkraft 20, 21 und auf das resultierende Faserband 18 eine Zugkraft 22 ausgeübt werden. Die Faserbänder 15 und 16 können somit unter einer gewissen Vorspannung aufeinander aufgebracht werden. Auf das resultierende Faserband 18 können selbstverständlich weitere thermoplastische Faserbänder 15, 16 aufgebracht werden.

Die thermoplastischen Faserverbundwerkstoff-Bänder 15, 16 bestehen aus einer thermoplastischen Kunststoff-Matrix mit darin eingebetteten Fasern, wobei der Fasergehalt bis zu über 60% Volumenprozent betragen kann. Als thermoplastische Matrix können beliebige thermoplastische Kunststoffe, die den entsprechenden Anforderungen genügen, verwendet werden, vorzugsweise aromatische Kunststoffe, insbesondere Polyetheretherketon oder Polyetherimid. Die thermoplastischen Faserbänder 15 und 16 können eine unterschiedliche Matrix und unterschiedliche Fasern aufweisen.
Als Fasern können beliebige Fasermaterialien verwendet werden, die eine entsprechend gewünschte Zugkraft aufweisen, vorzugsweise Kohlefasern oder Glasfasern.

**Tabelle 1**

| Bsp. | Material | Fasertyp | Matrix | Dichte (g/cm3) | Zugfestigkeit (MPa) | Elastizitäts modul (GPa) |
|---|---|---|---|---|---|---|
| a | QLG4068 | Glas | PPS | 1.65 | 1110 | 44 |
| b | QLC4160 | Kohle | PPS | 1.5 | 1837 | 114 |
| c | QLC4064 | Kohle | PPS | 1.5 | 1950 | 121 |
| d | PEI-S2 | Glas | PEI | 1.6 | 1170 | 55 |
| e | APC2-S2 | Glas | PEEK | 1.6 | 1170 | 55 |
| f | APC2-AS4 | Kohle | PEEK | 1.5 | 2070 | 140 |

In der Tabelle 1 sind die Materialeigenschaften einiger ausgewählter Beispiele thermoplastischer Faserverbundwerkstoff-Bänder dargestellt . Die in der Tabelle dargestellten Bänder bestehen aus Glas- oder Kohlefasern und einer Matrix aus Polyphenylensulfid (PPS), Polyetherimid (PEI) oder Polyetheretherketon (PEEK). Die Bänder mit den Bezeichnungen a, b, c werden von der Firma Quadrax, die Bänder mit den Bezeichnungen d, e, f von der Firma ICI Fiberite hergestellt.

Die maximale Gebrauchstemperatur der Bänder aus Beispiel a, b, c, und d beträgt etwa 200°C, diejenige der Beispiele e und f beträgt ungefähr 240°C. PEEK wird üblicherweise bei etwa 400°C und PPS bei etwa 340°C verarbeitet.

Nach Fig. 2 kann das thermoplastische Faserband 15 auch auf einen drehsymmetrischen Körper 1, insbesondere einen Läufer einer elektrischen Maschine, aufgebracht werden. Die dem drehsymmetrischen Körper 1 anliegende Seite der Heizvorrichtung 14 wird dann entsprechend dem Körper 1 ausgebildet, so dass sich auf dem Körper 1 befindendes thermoplastisches Faserband 15 ebenfalls erwärmt werden kann. Ist der drehsymmetrische Körper 1 ein Wickelkopf eines Läufers einer elektrischen Maschine, können durch die Auftragung des thermoplastischen Faserbandes 15 Bandagen zur Halterung des Wickelkopfes erzeugt werden.

Nach Fig. 3 besteht die Heizvorrichtung 14 aus einer Teilheizvorrichtung 14a und einer baugleichen Teilheizvorrichtung 14a*, mittels derer die an der Heizvorrichtung 14 vorbeigeführten thermoplastischen Faserbänder erwärmt werden. Die Teilheizvorrichtungen 14a, 14a* sind über nicht dargestellte Halterungen miteinander verbunden. Die Verbindung kann dabei beweglich ausgestaltet werden, so dass die Teilheizvorrichtungen gegeneinander verschoben werden können. Die Teilheizvorrichtungen 14a, 14a* sind in einem spitzen Winkel, der durch die Zuführung der thermoplastischen Faserbänder bestimmt wird, zueinander angeordnet.

Die Teilheizvorrichtung 14a besteht aus einem Tragelement 10a und einem darauf angeordneten Heizelement, einer Heizfolie 9. Die Heizfolie kann dabei eine elektrische oder eine infrarot Heizfolie sein. Die Heizfolie 9 erstreckt sich dabei mindestens über die Breite des thermoplastischen Faserbandes 15, 16. An dem dem Verschweissungsbereich 3 gegenüberliegenden Ende des Tragelementes 10a ist ein Kanal 7 angeordnet, der eine Schlitzdüse 5 aufweist. Ueber eine Zuführungsleitung 6a wird heisses Gas 4 in den Kanal 7 geleitet, das über die Schlitzdüse 5 zur Oberfläche des thermoplastische Faserbandes geleitet wird. Die Strömungsrichtung des aus der Schlitzdüse austretenden Heissgases entspricht der Förderrichtung des thermoplastischen Faserbandes. Das thermoplastische Faserband wird somit durch eine Kombination von Strahlungs-Heizung mittels der Heizfolie 9 und von Konvektions-Heizung mittels des über den Schlitz 5 zugeführten heissen Gases 4 erwärmt.
Durch die Eindüsung der heissen Gase 4 über den Schlitz 5 wird zudem ein Luftkissen über der Heizfolie 9 erzeugt, welches ein Verkleben des angeschmolzenen thermoplatischen Faserbandes mit der Heizfolie und damit mit der Heizvorrichtung verhindert.
Nicht dargestellt sind Teilheizvorrichtungen 14a, 14a*, bei denen die Konvektionsheizung, d.h. der Kanal 7, weggelassen ist. Das thermoplastische Faserband wird dann nur durch die Strahlungs-Heizung mittels der Heizfolie 9 erwärmt.
Durch die aus den Teilheizvorrichtungen 14a und 14a* gebildete Heizvorrichtung können Verschweissungsgeschwindigkeiten von bis zu über 300 mm/s erreicht werden.

Die Teilheizvorrichtungen 14a und 14a* sind dabei individuell regelbar, d.h. die jeweils an die thermoplastischen Faserbänder abgegebene Wärmeenergie kann individuell eingestellt werden. So kann beispielsweise in Fig. 2 Wärmeenergie über den Läufer 1 abgeleitet werden, wozu dann mittels der dem Läufer zugeordneten Teilheizvorrichtung mehr Wärmeenergie zugeführt wird.

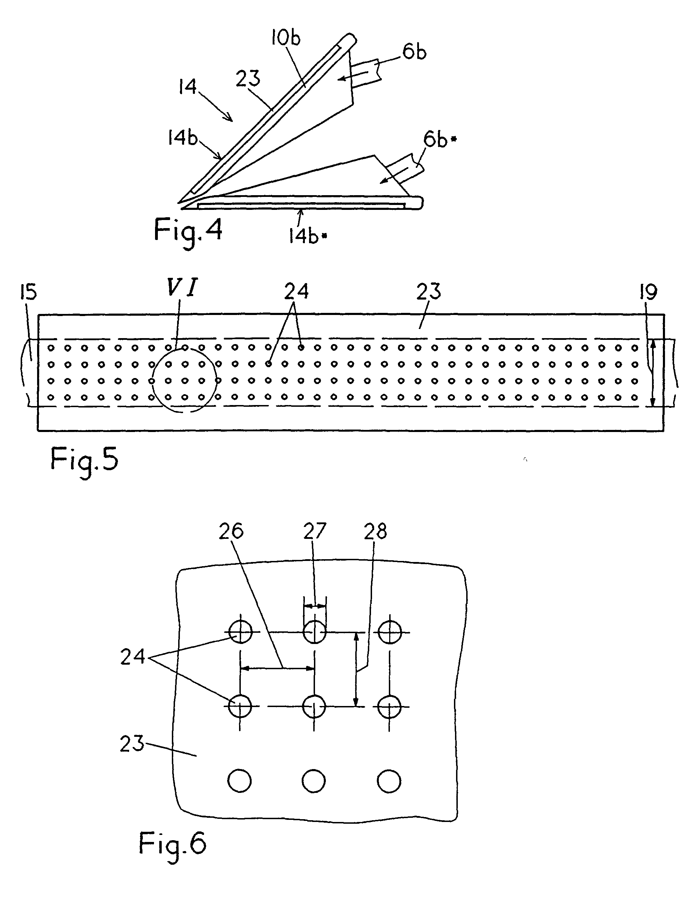

Nach Fig. 4 kann die Heizvorrichtung 14 auch aus einer Teilheizvorrichtung 14b und einer baugleichen Teilheizvorrichtung 14b* bestehen. Die Teilheizvorrichtungen 14b, 14b* sind über nicht dargestellte Halterungen miteinander verbunden. Die Verbindung kann dabei beweglich ausgestaltet werden, so dass die Teilheizvorrichtungen gegeneinander verschoben werden können. Die Teilheizvorrichtungen 14b, 14b* sind in einem spitzen Winkel, der durch die Zuführung der thermoplastischen Faserbänder bestimmt wird, zueinander angeordnet

Die Teilheizvorrichtung 14b besteht aus einem Tragelement 10b und einer darauf angeordneten Lochplatte 23. Die Lochplatte 23 erstreckt sich dabei mindestens über die Breite des thermoplastischen Faserbandes 15, 16. Ueber eine Zuführungsleitung 6b wird heisses Gas 4 über nicht näher dargestellte Kanäle zu dem Tragelement 10b und damit zu der Lochplatte 23 geleitet.
Selbstverständlich kann auch hier ein Kanal mit einer Schlitzdüse zur konvektiven Erwärmung des thermoplastischen Faserbandes angeordnet werden.

Nach Fig. 5 und 6 sind in der Lochplatte 23 mehrere Löcher 24 angeordnet, die als Prallstromdüsen dienen. Das thermoplastische Faserband wird somit durch eine Prallstrom-Heizung mittels des durch die Löcher 23 geleiteten heissen Gases 4 erwärmt.
Die Anordnung der Löcher 24, deren Lochdurchmesser 27 sowie der Abstand von der Lochplatte 23 zum thermoplastischen Faserband ist dabei auschlaggebend für die konvektive Wärmeübertragung.

Als Faustregel kann angegeben werden, dass über eine Breite 19 des thermoplastischen Faserbandes mindestens zwei Löcher 24 angeordnet sein sollten. Die Abstände der Löcher 24 auf der Lochplatte 23 in Längs- und in Querrichtung sollte ungefähr zwischen zwei bis zehnmal den Lochdurchmesser 27 betragen. Der Abstand des thermoplastischen Faserbandes von der Lochplatte 23 sollte zwischen zwei bis achtmal den Lochdurchmesser 27 betragen.
Für die obengenannten Typen von thermoplastischen Faserbändern sollte die Temperatur der durch die Löcher 24 geleiteten heissen Gase zwischen 500 und 900°C liegen und die Strömungsgeschwindigkeit sollte zwischen 0.1 bis 30 m/s, insbesondere zwischen 1 bis 20 m/s liegen.

Die Lochplatte 15 kann zusätzlich auch noch beheizt werden, dies kann insbesondere elektrisch erfolgen. Dadurch wird einerseits das thermoplastische Faserband über die Lochplatte erwärmt und andererseits die durch die Löcher 24 geleiteten Gase erwärmt oder zumindest eine Abkühlung der durch die Löcher geleiteten Gase verhindert.

Durch die Eindüsung der Gase durch die Löcher 24 wird zudem ein Luftkissen über der Lochplatte 15 erzeugt, welches ein Verkleben des angeschmolzenen thermoplatischen Faserbandes mit der Lochplatte und damit mit der Heizvorrichtung verhindert.

Durch die aus den Teilheizvorrichtungen 14b und 14b* gebildete Heizvorrichtung können Verschweissungsgeschwindigkeiten von bis zu über 300 mm/s erreicht werden.

Selbstverständlich ist die Erfindung nicht auf das gezeigte und beschriebene Ausführungsbeispiel beschränkt. Die Heizvorrichtung kann auch durch eine Kombination der Teilheizvorrichtungen 14a und 14b gebildet werden. Die Zuführleitung 6 kann durch mehrere Zuführleitungen ersetzt werden. Die Geometrie der Teilheizvorrichtungen 14a, 14b, respektive der Heizelemente 9, 23 werden jeweils entsprechend der Geometrie des Elementes 1,17 auf das die Faserbänder aufgebracht werden ausgestaltet.

### Bezugszeichenliste

- 1: Läufer
- 3: Verschweissungsbereich
- 4: Gas
- 5: Schlitzdüse
- 6: Zuführleitung
- 6a: Zuführleitung
- 6b: Zuführleitung
- 7: Kanal
- 8: Druckzylinder
- 9: Heizfolie
- 10a: Tragelement
- 10b: Tragelement
- 11: Pressrolle
- 12: Führungsrolle
- 14: Heizvorrichtung
- 14a: Teilheizvorrichtung
- 14b: Teilheizvorrichtung
- 15: thermoplastisches Faserverbundwerkstoff-Band
- 16: thermoplastisches Faserverbundwerkstoff-Band
- 17: Bodenplatte
- 18: resultierendes Faserband
- 19: Breite Faserband
- 20: Zugkraft auf 15
- 21: Zugkraft auf 16
- 22: Zugkraft auf 18
- 23: Lochplatte
- 24: Loch
- 26: Lochabstand längs thermoplastisches Faserband
- 27: Lochdurchmesser
- 28: Lochabstand thermoplastisches Faserband

## Patentansprüche

1. Verschweissvorrichtung mit einer Heizvorrichtung (14) zur Erwärmung von thermoplastischen Faserverbundwerkstoffbändern (15, 16), wobei mittels der Heizvorrichtung (14) die Oberflächen der thermoplastischen Faserbänder (15, 16) angeschmolzen werden, um die thermoplastischen Faserbänder (15, 16) miteinander zu verschweissen und wobei an der Heizvorrichtung (14) mindestens ein ausgedehntes Heizelement (9, 23) angeordnet ist,
dadurch gekennzeichnet,
dass die Heizvorrichtung (14) ein Tragelement (10a,10b) aufweist, auf welchem das mindestens eine Heizelement (9,23) angeordnet ist und dass am Tragelement (10a,10b), am seinem einem Verschweissungsbereich (3) der thermoplastischen Faserbänder (15,16) gegenüberliegenden Ende, mindestens ein Kanal (7) angeordnet ist, der ein Schlitzdüse (5) zur Zuführung von heissem Gas aufweist.

2. Verschweissvorrichtung mit einer Heizvorrichtung nach Anspruch 1,
dadurch gekennzeichnet,
dass die Heizvorrichtung (14) aus mindestens zwei getrennt regelbaren Teilheizvorrichtungen (14a, 14a*;14b, 14b*) besteht, an denen jeweils mindestens ein Heizelemente (9, 23) angeordnet ist.

3. Verschweissvorrichtung mit einer Heizvorrichtung nach Anspruch 1,
dadurch gekennzeichnet,
dass die Teilheizvorrichtung (14a, 14b) ein Tragelement (10a, 10b) und ein darauf angeordnetes Heizelement (9, 23) umfasst.

4. Verschweissvorrichtung mit einer Heizvorrichtung nach Anspruch 1, 2 oder 3, dadurch gekennzeichnet,
dass das Heizelement eine Heizfolie (9) ist, welche Wärmeenergie abstrahlt.

5. Verschweissvorrichtung mit einer Heizvorrichtung nach Anspruch 1, 2 oder 3, dadurch gekennzeichnet,
dass das Heizelement eine Lochplatte (23) mit als Prallstromdüsen ausgebildeten Löchern (24) ist.

6. Verschweissvorrichtung mit einer Heizvorrichtung nach Anspruch 1 oder 5,
dadurch gekennzeichnet,
dass mindestens eine Zuführleitung (6, 6a, 6b) für Heissgase an der Heizvorrichtung (14) angeordnet ist.

7. Verschweissvorrichtung mit einer Heizvorrichtung nach Anspruch 1,
dadurch gekennzeichnet,
dass die Schlitzdüse (5) zwischen dem thermoplastischen Faserband (15, 16) und dem Tragelement angeordnet ist.

8. Verschweissvorrichtung mit einer Heizvorrichtung nach Anspruch 5,
dadurch gekennzeichnet,
dass der Abstand des thermoplastischen Faserbandes (15, 16) von der Lochplatte (23) zwischen zwei bis achtmal eines Durchmessers (27) der Löcher (24) der Lochplatte (23) beträgt .

## Claims

1. Welding device having a heating device (14) for heating thermoplastic fibre composite material tapes (15, 16), the surfaces of the thermoplastic fibre tapes (15, 16) being melted by means of the heating device (14) in order to weld the thermoplastic fibre tapes (15, 16) to each other, and at least one extended heating element (9, 23) being arranged on the heating device (14), characterized in that the heating device (14) has a support element (10a, 10b) on which the at least one heating element (9, 23) is arranged, and in that on the support element (10a, 10b), at its end opposite a welding area (3) of the thermoplastic fibre tapes (15, 16), there is arranged at least one duct (7) which has a slotted nozzle (5) for the supply of hot gas.

2. Welding device having a heating device, according to Claim 1, characterized in that the heating device (14) comprises at least two separately controllable part heating devices (14a, 14a*; 14b, 14b*), on which at least one heating element (9, 23) is arranged in each case.

3. Welding device having a heating device, according to Claim 1, characterized in that the part heating device (14a, 14b) comprises a support element (10a, 10b) and a heating element (9, 23) arranged thereon.

4. Welding device having a heating device, according to Claim 1, 2 or 3, characterized in that the heating element is a heating foil (9), which radiates thermal energy.

5. Welding device having a heating device, according to Claim 1, 2 or 3, characterized in that the heating element is a perforated plate (23) with holes (24) constructed as impinging-flow nozzles.

6. Welding device having a heating device, according to Claim 1 or 5, characterized in that at least one feed line (6, 6a, 6b) for hot gases is arranged on the heating device (14).

7. Welding device having a heating device, according to Claim 1, characterized in that the slotted nozzle (5) is arranged between the thermoplastic fibre tape (15, 16) and the support element.

8. Welding device having a heating device, according to Claim 5, characterized in that the distance of the thermoplastic fibre tape (15, 16) from the perforated plate (23) is between two and eight times a diameter (27) of the holes (24) in the perforated plate (23).

## Revendications

1. Dispositif de soudage avec un dispositif de chauffage (14) pour le chauffage de bandes thermoplastiques de matériau composite renforcé par des fibres (15, 16), dans lequel la surface des bandes thermoplastiques renforcées par des fibres (15, 16) est fondue au moyen du dispositif de chauffage (14), afin de souder l'une à l'autre les bandes thermoplastiques renforcées par des fibres (15, 16) et dans lequel au moins un élément chauffant étendu (9, 23) est disposé sur le dispositif de chauffage (14), caractérisé en ce que le dispositif de chauffage (14) comprend un élément porteur (10a, 10b) sur lequel est disposé ledit au moins un élément chauffant (9, 23) et en ce qu'au moins un canal (7), qui présente une buse fendue (5) pour l'arrivée de gaz chaud, est disposé sur l'élément porteur (10a, 10b), sur son extrémité faisant face à une zone de soudage (3) des bandes thermoplastiques renforcées par des fibres (15, 16).

2. Dispositif de soudage avec un dispositif de chauffage suivant la revendication 1, caractérisé en ce que le dispositif de chauffage (14) se compose d'au moins deux dispositifs de chauffage partiels (14a, 14a*; 14b, 14b*) réglables séparément, dans lesquels est chaque fois disposé au moins un élément chauffant (9, 23).

3. Dispositif de soudage avec un dispositif de chauffage suivant la revendication 1, caractérisé en ce que le dispositif de chauffage partiel (14a, 14b) comprend un élément porteur (10a, 10b) et un élément chauffant (9, 23) disposé sur celui-ci.

4. Dispositif de soudage avec un dispositif de chauffage suivant la revendication 1, 2 ou 3, caractérisé en ce que l'élément chauffant est un film chauffant (9), qui rayonne de l'énergie thermique.

5. Dispositif de soudage avec un dispositif de chauffage suivant la revendication 1, 2 ou 3, caractérisé en ce que l'élément chauffant est une plaque perforée (23), avec des trous (24) ayant la forme de buses à jets concourants.

6. Dispositif de soudage avec un dispositif de chauffage suivant la revendication 1 ou 5, caractérisé en ce qu'au moins une conduite d'arrivée (6, 6a, 6b) pour des gaz chauds est disposée sur le dispositif de chauffage (14).

7. Dispositif de soudage avec un dispositif de chauffage suivant la revendication 1, caractérisé en ce que la buse fendue (5) est disposée entre la bande thermoplastique renforcée par des fibres (15, 16) et l'élément porteur.

8. Dispositif de soudage avec un dispositif de chauffage suivant la revendication 5, caractérisé en ce que la distance de la bande thermoplastique renforcée par des fibres (15, 16) à la plaque perforée (23) est comprise entre deux à huit fois un diamètre (27) des trous (24) de la plaque perforée (23).
